# EUROPÄISCHE PATENTSCHRIFT

(11) **EP 0 455 865 B1**
(45) Veröffentlichungstag und Bekanntmachung des Hinweises auf die Patenterteilung: **02.08.1995**
(21) Anmeldenummer: 90122062.4
(22) Anmeldetag: 19.11.1990
(51) Int. Cl.: H04J 3/07

(54) **Anordnung zum Abbilden eines Nutzsignals aus dem Rahmen eines ersten Digitalsignals mittels Impulsstopftechnik in den Rahmen eines zweiten Digitalsignals und Verwendung der Anordnung**
Circuit for inserting a useful signal from a frame of a first digital signal using stuffing in a frame of a second digital signal and the use of this circuit
Circuit pour insérer un signal utile d'une trâme d'un premier signal numérique utilisant la technique de bourrage dans une trâme d'un deuxième signal numérique et utilisation d'un tel circuit

(30) Priorität: 09.05.1990 DE 4014813
(43) Veröffentlichungstag der Anmeldung: 13.11.1991
(73) Patentinhaber: ANT Nachrichtentechnik GmbH, D-71522 Backnang (DE)
(72) Erfinder: Nawrocki, Rainer, Dr.-Ing., W-2000 Hamburg 20 (DE); Brünle, Siegfried, Dipl.-Ing., W-7300 Esslingen (DE); Ehrlich, Wolfgang, Dipl.-Ing., W-7151 Allmersbach i.T. (DE)

(56) Entgegenhaltungen:
- EP-A- 0 214 656
- CONFERENCE PROCEEDINGS IEEE PACIFIC RIM CONFERENCE ON COMMUNICATIOS, COMPUTERS AND SIGNAL PROCESSING 1. Juni 1989, VICTORIA (CA) Seiten 435 - 438; T.E. MOORE ET AL.: 'Jitter analysis for DS-3 to Sonet interface circuit with reduced complexity.'

## Beschreibung

Anordnung zum Abbilden eines Nutzsignals aus dem Rahmen eines ersten Digitalsignals mittels Impulsstopftechnik in den Rahmen eines zweiten Digitalsignals und Verwendung der Anordnung.

Die Erfindung betrifft eine Anordnung zum Abbilden eines Nutzsignals aus dem Rahmen eines ersten Digitalsignals mit einer ersten Bitrate mittels Impulsstopftechnik in den Rahmen eines zweiten Digitalsignals mit einer zweiten Bitrate, wobei die Bitraten des ersten und zweiten Digitalsignals größer als die Bitrate des Nutzsignals sind und eine Verwendung dieser Anordnung.

Wenn ein gegebenes Digitalsignal mit einer anderen als mit seiner ursprünglichen Bitrate übertragen werden soll, dann wird das Verfahren des Impulsstopfens eingesetzt. Im wesentlichen sind zwei Varianten des Impulsstopfens bekannt: Das Positiv-Stopfen und das Positiv-Null-Negativ-Stopfen. Um das urprüngliche Digitalsignal rückzugewinnen, muß der Stopfvorgang wieder rückgängig gemacht werden und der Takt zurückgewonnen werden. Der Takt wird meist nur unvollkommen geglättet und ist mit einer Phasenmodulation, dem Wartezeitjitter, behaftet.

In Duttweiler D.L., "Waiting time Jitter", The Bell System Technical Journal, Vo. 51, No. 1, 1972, S. 165 -207 ist ein Synchronisierer und ein Desynchronisierer für Positiv-Stopfen beschrieben. Der Desynchronisierer weist einen elastischen Speicher auf, in den ein Digitalsignal A eingeschrieben und aus dem ein Digitalsignal D ausgelesen wird. Der Schreibzähler, mit dem die Daten aus dem Digitalsignal A in den elastischen Speicher eingeschrieben werden, zählt mit Hilfe der Stopfinformation derart, daß er ein genaues Duplikat des Lesezählers im Synchronisierer ist. Der Lesezähler, der angibt, wann aus dem elastischen Speicher ausgelesen wird, erhält seine Impulse von einem spannungsgesteuerten Oszillator. Ein Phasenvergleicher vergleicht die Phasen zwischen dem Schreibzähler und dem Lesezähler. Der Vergleichswert wird gefiltert und dem spannungsgesteuerten Oszillator zugeführt. Der Desynchronisierer arbeitet also wie eine PLL-Schaltung und glättet die Lücken im Takt des Digitalsignals, die durch die Stopfbits entstehen. Die anlogen PLL-Schaltungen benötigen relativ viel Platz und Leistung.

Wenn ein Nutzsignal aus dem Rahmen eines ersten Digitalsignals in den Rahmen eines zweiten Digitalsignals umgestopft werden soll, so wird zunächst das Nutzsignal mit Hilfe einer Phasenregelschleife wiedergewonnen. Das rückgewonnene Nutzsignal ist mit einem Wartezeitjitter behaftet. Dieses rückgewonnene Nutzsignal kann dann in den Rahmen des zweiten Digitalsignals gemappt werden.

Aus Moore T.E., Browin J.J. und Krymien W.A. "Jitter Analysis For DS-3 To Sonet Interface Circuit With Reduced Complexity", Conference Proceedings IEEE Pacific Rim Conference on Communications, Computers and Signal Processing, 1. bis 2. Juni 1989, Victoria (Canada), Seiten 435 - 438 ist es bekannt, Desynchronisierer ohne PLL-Anordnungen einzusetzen. Es wurde der Effekt auf den Wartezeitjitter untersucht.

Ausgehend vom Stand der Technik nach Duttweiler ist es Aufgabe der Erfindung, eine Anordnung anzugeben, mit der es möglich ist, ein Nutzsignal aus einem ersten Digitalsignal mit einem ersten Rahmen und einer ersten Bitrate in ein zweites Digitalsignal mit einem zweiten Rahmen und einer zweiten Bitrate umzustopfen. Es ist weiter Aufgabe der Erfindung eine Verwendung der Anordnung anzugeben.

Die Aufgabe wird gelöst durch eine Anordnung gemäß den kennzeichnenden Merkmalen des Patentanspruches 1. Eine Verwendung ist in Anspruch 4 angegeben.

Vorteilhafte Weiterbildungen sind in den abhängigen Ansprüchen angegeben.

Durch den Einsatz eines digitalen Regelkreises können die analogen PLL-Anordnungen entfallen.

Mit der erfindungsgemäßen Anordnung ist es möglich, das Umstopfen eines Nutzsignals aus einem ersten Digitalsignal mit einem ersten Rahmen in ein zweites Digitalsignal mit einem zweiten Rahmen in einem Schritt durchzuführen. Die Bitrate des Nutzsignals ist dabei geringer als die Bitraten der beiden Digitalsignale. Es wird nicht zunächst ein Desynchronisierer und dann ein Synchronisierer mit jeweils einem elastischen Speicher eingesetzt, sondern es ist nur ein elastischer Speicher notwendig. Außerdem ist kein analoger Phasenregelkreis notwendig. Mit Hilfe der angegebenen Anordnung wird der übertragene mittlere Füllstand des elastischen Speichers eines Synchronisierers genutzt, um den Wartezeitjitter zu minimieren.

Gemäß dem Stand der Technik wird die Information, ob gestopft wurde oder nicht, in 1-bit-Schritten mittels der Stopfinformation vom Synchronisierer zum Desynchronisierer übertragen. Hierdurch kann ein hoher Wartezeitjitter auftreten. Weist das Ausgangssignal eines Synchronisierers ausreichend freien Platz auf, so daß Zusatzinformationen übertragen werden, dann kann der mittlere Füllstand des elastischen Speichers übertragen werden. Nutzt man diesen mittleren Füllstand aus, um den Regelkreis der erfindungsgemäßen Anordnung zu steuern, so findet eine Phasenmitführung statt, und der Wartezeitjitter kann reduziert werden. Zur Durchführung dieses Verfahrens ist es notwendig, den mittleren Füllstand des elastischen Speichers genau zu bestimmen.

Die Anordnung arbeitet nach dem folgenden Stopfverfahren: Der Füllstand des elastischen Speichers im Synchronisierer wird an mehreren Zeitpunkten innerhalb des Rahmens des Ausgangssignals A des Synchronisierers bestimmt und die Werte werden aufakkumuliert. Der aufakkumulierte Wert wird zur Anordnung übertragen. Dort wird an den gleichen Stützstellen im Rahmen des Eingangssignals A des Desynchronisierers durch Akkumulation ein Maß für den Füllstand des elastischen Speichers der Anordnung bestimmt. Der digitale Regelkreis in der Anordnung wird durch den Vergleich der Maße der Füllstände der elastischen Speicher im Synchronisierer bzw. in der Anordnung gesteuert. Für die Wahl der Stützstellen zur Bestimmung des Füllstandes der elastischen Speicher ist folgendes Kriterium von Vorteil, um einen möglich geringen Wartezeitjitter zu erhalten: Der Abstand der Stützstellen sollte im Stopfrahmen des Digitalsignals A möglichst äquidistant sein. Die Stützstellen sollten über den gesamten Stopfrahmen verteilt sein.

Anhand der Figuren wird ein Ausführungsbeispiel der Erfindung erläutert. Es zeigen
Figur 1 eine erfindungsgemäße Anordnung,
Figur 2 das Zusammenwirken von Synchronisierer und einer Anordnung,
Figur 3 einen Aufbau zum Umstopfen eines Nutzsignals aus einem ersten Digitalsignal S in ein zweites Digitalsignal A und wieder in das erste Digitalsignal.

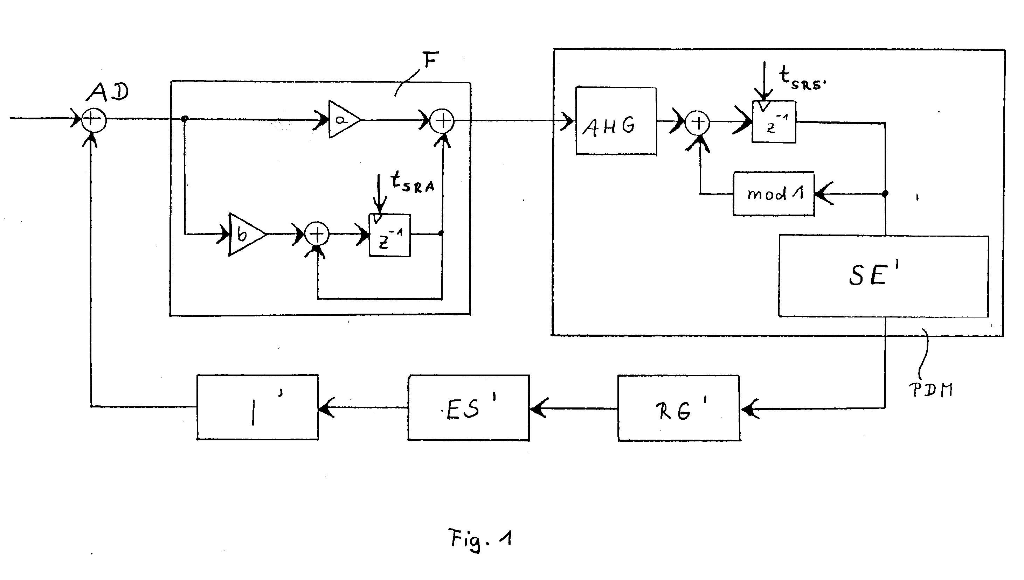

Das ermittelte Maß für den mittleren Füllstand des elastischen Speichers eines Synchronisierers wird zu der in Figur 1 dargestellten Anordnung übertragen. Auch in der Anordnung wird der mittlere Füllstand eines elastischen Speichers ES′ ermittelt. Ein Integrierer I′ liefert das Maß für den mittleren Füllstand des elastischen Speichers ES′. In einem Addierer A werden das übertragene Maß für den Füllstand des elastischen Speichers ES im Synchronisierer und das ermittelte Maß für den Füllstand des elastischen Speichers ES′ der Anordnung verglichen. Der Vergleichswert wird einem digitalen Filter F zugeführt und regelt über das Filter das Stopfverhältnis, das am Ausgang des Filters erscheint. Das digitale Filter bestimmt die Tiefpaßgrenzfrequenz und den Dämpfungsfaktor des digitalen Regelkreises 2. Ordnung. Der gefilterte Wert, das Stopfverhältnis, wird dann einem Pulsdichtemodulator PDM zugeleitet, in dem die Stopfentscheidung getroffen wird, die dann einem Rahmengenerator RG′, der den Rahmen des Ausgangssignals der Anordnung erzeugt und den Leseeingang des elastischen Speichers ES′ steuert, zugeführt wird. Der Pulsdichtemodulator PDM ist wie folgt aufgebaut: Zunächst wird das Ausgangssignal des Filters F, also das Stopfverhältnis einem Abtasthalteglied AHG zugeführt. Einmal pro Stopfrahmen des Ausgangssignals S′, also mit dem Takt t_{SRS′}, wird das Stopfverhältnis aufsummiert. Ist die Summe ≧ 1, so wird gestopft und die Summe um 1 verringert. Ist die Summe < 1, dann wird nicht gestopft. Die Entscheidung ob gestopft wird, wird im Stopfentscheider SE′ getroffen.

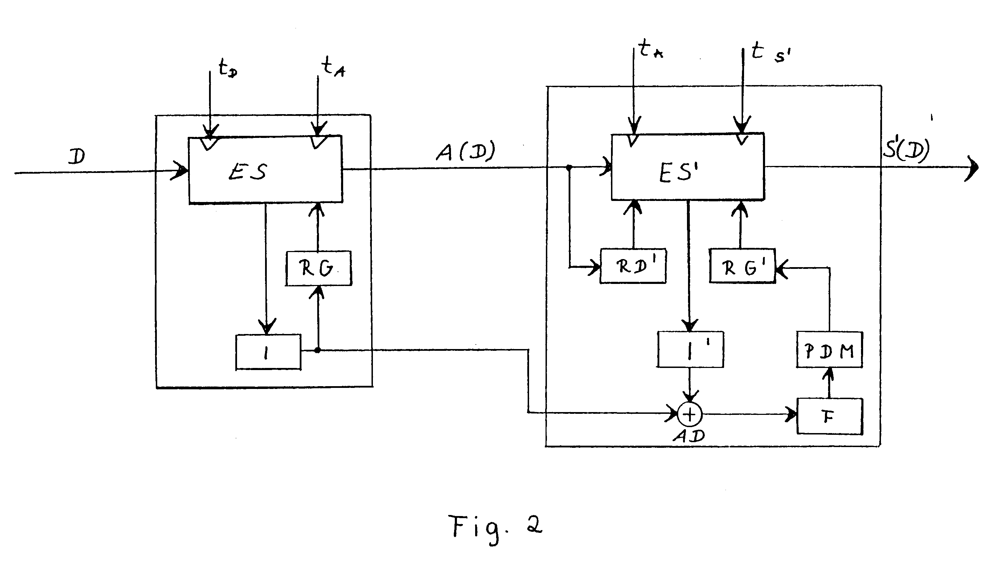

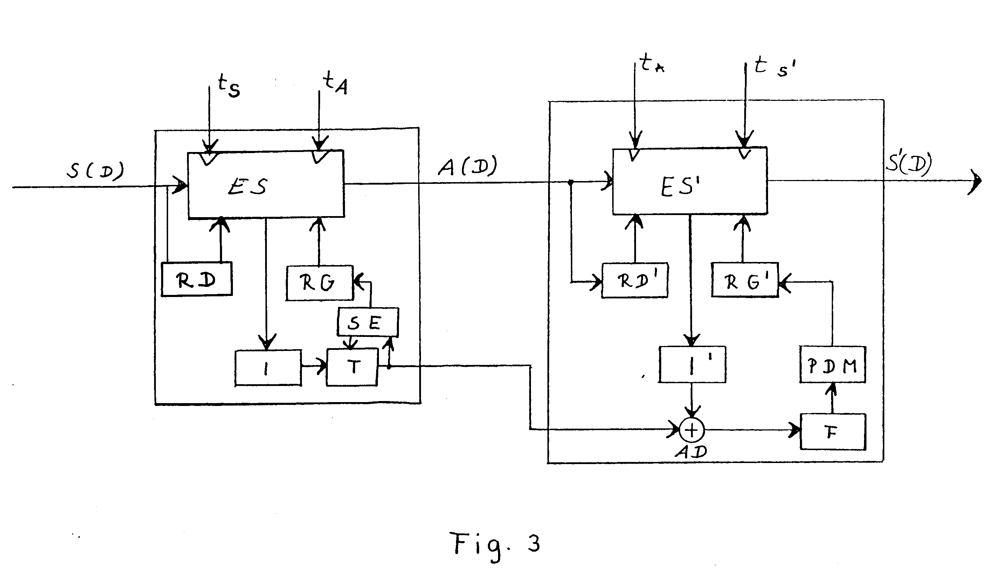

Figur 2 ist dargestellt, wie ein Synchronisierer und eine Anordnung zusammenwirken. Dem Synchronisierer wird ein erstes Digitalsignal D zugeführt, das mit einem Takt T_{D} in einem elastischen Speicher ES eingelesen wird. Dieses Signal D wird in ein zweites Digitalsignal A abgebildet, daß dann zur Anordnung übertragen wird. In der Anordnung soll nun aus dem Signal A das Digitalsignal D rückgewonnen und in das Signal S′ abgebildet werden. Die Bitraten der Signale A und S′ sind dabei größer als die des Signals D. Das rückgewonnene Signal ist mit einem Wartezeitjitter behaftet. Dieser kann durch die Übertragung des mittleren Füllstandes des Speichers ES zur Anordnung und durch die Auswertung der Füllstände mittels einem Addierer AD, einem digitalen Filter F und einem Pulsdichtemodulator PDM reduziert werden. In Figur 2 sind die wichtigsten Teile von Synchronisierer und Anordnung blockbildartig dargestellt. Sie entsprechen in der Anordnung den bereits in der Figur 1 dargestellten und beschriebenen Einheiten. In der Anordnung ist darüber hinaus ein Rahmendetektor RD′ zu erkennen, der den Rahmen des Digitalsignals A erkennt und den Schreibeingang des elastischen Speichers ES′ steuert. Die Signale A und S′ enthalten jeweils das Nutzsignal D, das in den elastischen Speicher je nach vorgegebenem Rahmen gelückt eingeschrieben und gelückt ausgelesen wird. Das gelückte Einlesen des Nutzsignals wird über den Schreibeingang des elastischen Speichers und das gelückte Auslesen über den Leseeingang des elastischen Speichers gesteuert. In die über den Schreibeingang erzeugten Lücken des Ausgangssignals des elastischen Speichers fügt der elastische Speicher notwendige Synchronisier- und Rahmenbits ein. Die Maße für die Füllstände der elastischen Speicher ES und ES′ sind gegenläufig und werden im Addierer AD addiert und der Summenwert regelt über ein digitales Filter F das Stopfverhältnis. Aus diesem Stopfverhältnis leitet ein Pulsdichtemodulator PDM die Stopfentscheidung ab.
Ein der Anordnung zugeordneter "Synchronisierer" kann auch wie folgt aufgebaut sein (Figur 3):

Es handelt sich bei dem "Synchronisierer" ebenfalls um eine Anordnung zum Umstopfen, der das erste Digitalsignal S (D), das das Nutzsignal D enthält zugeführt wird. Das Nutzsignal wird in einen elastischen Speicher ES gelückt eingeschrieben. Ein Rahmendetektor RD erkennt den Rahmen des Digitalsignals S (D) und steuert die Schreibaktivierung des elastischen Speichers ES. Aus dem elastischen Speicher ES wird das Nutzsignal D ausgelesen, das in den Rahmen eines Digitalsignals A eingefügt wird. Das Digitalsignal A weist eine Stopfrahmenfrequenz t_{SRA} auf. In jedem Stopfrahmen besteht die Möglichkeit einmal zu stopfen. Ein Rahmengenerator RG ist vorgesehen, der den Rahmen des Digitalsignals A erzeugt und die Leseaktivierung des elastischen Speichers ES steuert. Der momentane Füllstand des elastischen Speichers ES wird bestimmt. Zur Ermittlung des mittleren Füllstandes des elastischen Speichers ES, der einmal je Stopfrahmen ermittelt und übertragen werden soll, werden die momentanen Füllstände in einem Integrierer I aufakkumuliert. Dies geschieht einmal je Stopfrahmen, also mit der Frequenz des Stopfrahmens t_{SRA}, die dem Integrierer zugeführt wird. Es ist bei der Aufakkumulation nicht notwendig, alle Vergleichswerte als Summanden vorzusehen. Das Ausgangssignal des Integrierers I ist der mittlere Füllstand des elastischen Speichers ES des n-ten Stopfrahmens. Dieses Signal wird einem digitalen Tiefpaß T zugeführt. Der digitale Tiefpaß wird ebenfalls mit der Stopfrahmenfrequenz t_{SRA} getaktet. Sein Ausgangssignal ist der mittlere gefilterte Füllstand des elastischen Speichers des n-ten Stopfrahmens. Der mittlere gefilterte Speicherfüllstand kann als Zusatzinformation im Rahmen des Digitalsignals A zur erfindungsgemäßen Anordnung übertragen werden. Außerdem wird der mittlere gefilterte Speicherfüllstand des n-ten Stopfrahmens einem Entscheider SE zugeführt, der die Stopfentscheidung in Abhängigkeit von dem Ausgangssignal des Tiefpaßfilters T fällt. Die Stopfentscheidung wird in Form eines Korrekturwertes dem Rahmengenerator RG zugeführt. Außerdem wird sie auch dem digitalen Tiefpaß zugeführt, um das Ausgangssignal des Tiefpaßes zu korrigieren. Eine Stopfentscheidung wird wie folgt gefällt: Positiv wird gestopft, wenn der mittlere gefilterte Speicherfüllstand des n-ten Stopfrahmens kleiner als eine untere Schwelle für den mittleren Speicherfüllstand Sᵤ ist. Negativ wird gestopft, wenn der mittlere gefilterte Speicherfüllstand des n-ten Stopfrahmens größer als die obere Schwelle für den mittleren Speicherfüllstand Sₒ ist. Liegt der mittlere gefilterte Speicherfüllstand des n-ten Stopfrahmens zwischen der oberen Schwelle Sₒ und der unteren Schwelle Sᵤ, so ist kein Stopfen notwendig. Durch Einsatz des Tiefpasses und durch Zuführung des Korrekturwertes wird der sägezahnförmige Verlauf des mittleren Speicherfüllstandes wieder hergestellt. In der erfindungsgemäßen Anordnung wird das Nutzsignal D wieder in das Signal S′ (D) abgebildet. Die Darstellung der Anordnung entspricht der aus Figur 2.

## Patentansprüche

1. Anordnung zum Abbilden eines Nutzsignals D aus dem Rahmen eines ersten Digitalsignals (A(D)) mit einer ersten Bitrate, mittels Impulsstopftechnik in den Rahmen eines zweiten Digitalsignal (S′(A)) mit einer zweiten Bitrate, dadurch gekennzeichnet daß,
a) ein elastischer Speicher (ES′) vorgesehen ist, in den das Nutzsignal (D) aus dem Rahmen des ersten Digitalsignals in das zweite Digitalsignal (A(D)) geschrieben wird und aus dem das Nutzsignal (D) in den Rahmen des zweiten Digitalsignals (S′(D)) ausgelesen wird,
b) ein Integrator (I′) vorgesehen ist, der ein Maß für den mittleren Füllstand des elastischen Speichers (ES′) bildet, das mit dem Maß für den mittleren Füllstand des elastischen Speichers (ES) eines Synchronisierers vergleichbar ist,
c) ein Addierer (AD) vorgesehen ist, in dem das Maß für den mittleren Füllstand des elastischen Speichers (ES) des Synchronisierers, das im Rahmen des zweiten Digitalsignals (A) zum Desynchronisierer übertragen wurde, und das Maß für den mittleren Füllstand des elastischen Speichers (ES′) der Anordnung addiert werden,
d) ein digitales Filter (F) mit dem Addierer verbunden ist,
e) ein Pulsdichtemodulator (PDM) vorgesehen ist, der die Stopfentscheidung in Abhängigkeit vom Ausgangswert des digitalen Filters (F) fällt,
f) ein Rahmengenerator (RG′) vorgesehen ist, der den Rahmen des zweiten Digitalsignals (S(D*)) erzeugt und die Leseaktivierung des elastischen Speichers (ES′) steuert, und
g) ein Rahmendetektor (RD′) vorgesehen ist, der den Rahmen des ersten Digitalsignals (A (D)) erkennt und die Schreibaktivierung des elastischen Speichers steuert.

2. Anordnung nach Anspruch 1, dadurch gekennzeichnet, daß der Pulsdichtemodulator (PDM) folgende Merkmale aufweist:
Ein Abtasthalteglied (AHG) ist vorgesehen, dem das Ausgangssignal des Filters (F) zugeführt wird, ein Addierer ist vorgesehen, der einmal je Stopfrahmen des zweiten Digitalsignals (S′(D)) zur Summe der bisherigen Ausgangssignale modulo 1 das Ausgangssignal des Filters (F) hinzuaddiert und ein Stopfentscheider (SE′) ist vorgesehen, in dem die Stopfentscheidung in Abhängigkeit vom Ergebnis der Addition getroffen wird.

3. Anordnung nach einem der Ansprüche 1 oder 2, dadurch gekennzeichnet, daß zur Ermittlung eines Maßes für den mittleren Füllstand des elastischen Speichers (ES) folgende Mittel vorgesehen sind:
a) ein Schreibzähler, der immer dann zählt, wenn ein Bit in den elastischen Speicher (ES) eingeschrieben wird,
b) ein Lesezähler, der immer dann zählt, wenn ein Bit aus dem elastischen Speicher (ES) ausgelesen wird,
c) ein Abtaster, der den Zähler abtastet, der das Ein- oder Auslesen des Digitalsignals mit der niedrigen Bitrate zählt, wobei der Abtasttakt der Bitrate des Digitalsignals mit der höheren Bitrate entspricht,
d) ein Vergleicher, der den Abtastwert des Standes des einen Zählers mit dem Stand des anderen Zählers vergleicht und
e) ein Integrator, der aus den Vergleichswerten das Maß für den mittleren Füllstand bildet.

4. Verwendung der Anordnung nach einem der Ansprüche 1 bis 3 in einem System aus Synchronisierer, Übertragungsleitung und dieser Anordnung, wobei im Synchronisierer der mittlere Füllstand des elastischen Speichers ermittelt wird.

5. Verwendung nach Anspruch 4, dadurch gekennzeichnet, daß der Synchronisierer wie folgt aufgebaut ist:
a) ein elastischer Speicher (ES) ist vorgesehen, in den das Nutzsignal (D) aus dem Rahmen eines Digitalsignals (S) eingeschrieben wird und aus dem das Nutzsignal (D) in den Rahmen des Digitalsignals (A) ausgelesen wird,
b) ein Rahmendetektor (RD) ist vorgesehen, der den Rahmen des Digitalsignals S erkennt und die Schreibaktivierung des elastischen Speichers (ES) steuert,
c) ein Rahmengenerator (RG) ist vorgesehen, der den Rahmen des Digitalsignals (A) erzeugt und die Leseaktivierung des elastischen Speichers (ES) steuert,
d) ein Integrator (I) ist vorgesehen, der ein Maß für den mittleren Füllstand des elastischen Speichers (ES) bildet,
e) mit dem Integrator (I) ist ein Tiefpaßfilter (T) verbunden,
f) das Tiefpaßfilter (T) ist mit einem Entscheider (SE) verbunden, der die Stopfentscheidung in Abhängigkeit vom Ausgangssignal des Tiefpaßfilters (T) fällt und einen Korrekturwert erzeugt, der die Stopfinformation enthält,
g) der Entscheider (SE) ist mit einem Rahmengenerator (RF) verbunden, der das Stopfen nach Maßgabe des Korrekturwertes veranlaßt und
h) der Entscheider (SE) ist mit dem Tiefpaßfilter (T) verbunden, um die Ausgangsspannung des Tiefpaßfilters (T) mit dem Korrekturwert zu korrigieren.

## Claims

1. An arrangement for imaging a useful signal D from the frame of a first digital signal (A(D)) at a first bit rate by means of the pulse stuffing technique into the frame of a second digital signal (S′(D)) at a second bit rate, characterized in that
(a) an elastic memory (ES′) is provided into which the useful signal (D) from the frame of the first digital signal (A(D)) is written and from which the useful signal (D) is read out into the frame of the second digital signal (S′ (D)),
(b) an integrator (I′) is provided which furnishes a value for the average fill level of the elastic memory (ES′) which is compared with the value of the average fill level of the elastic memory (ES) of a synchronizer,
(c) an adder (AD) is provided in which the value of the average fill level of the elastic memory (ES) of the synchronizer transmitted within the frame of the second digital signal (A) to the desynchronizer and the value of the average fill level of the elastic memory (ES′) of the arrangement are added,
(d) a digital filter (F) is connected with the adder,
(e) a pulse density modulator (PDM) is provided which makes the stuffing decision as a function of the output value of the digital filter (F),
(f) a frame generator (RG′) is provided which generates the frame of the second digital signal (S(D*)) and controls the read-out activation of the elastic memory (ES′),
(g) a frame detector (RD′) is provided which detects the frame of the first digital signal (A (D)) and controls the write-in activation of the elastic memory.

2. An arrangement as defined in claim 1, wherein the pulse density modulator (PDM) comprises the following features:
a sample-and-hold member (AHG) is provided which receives the output signal of the filter (F), an addressor is provided which, once per stuffing frame of the second digital signal (S′(D)), adds the output signal of the filter (F) in modulo 1 to the sum of the previous output signals and a stuffing decider (SE′) is provided in which the stuffing decision is made as a function of the result of the addition.

3. An arrangement as defined in one of claims 1 or 2, wherein the following means are provided for a determination of a value for the average fill level of the elastic memory (ES):
(a) a write-in counter which advances one count whenever a bit is written into the elastic memory (ES),
(b) a read-out counter which advances one count whenever a bit is read out of the elastic memory (ES),
(c) a sampler which samples the counter counting the writing-in or reading-out of the digital signal at the lower bit rate, with the sampling clock pulse corresponding to the bit rate of the digital signal at the higher bit rate,
(d) a comparator which compares the sampled values of the count of the one counter with the count of the other counter,
(e) an integrator which forms the value of the average fill level from the comparison values.

4. Use of the arrangement as defined in one of claims 1 through 3 in a system composed of a synchronizer, a transmission line and this arrangement, with the average fill level of the elastic memory being determined in the synchronizer.

5. Use as defined in claim 4, wherein the synchronizer has the following configuration:
(a) an elastic memory (ES) is provided into which is written the useful signal (D) from the frame of one digital signal (S) and from which the useful signal (D) is read out into the frame of the digital signal (A),
(b) a frame detector (RD) is provided which detects the frame of the digital signal (S) and controls the write-in activation of the elastic memory (ES),
(c) a frame generator (RG) is provided which generates the frame of the digital signal (A) and controls the read-out activation of the elastic memory (ES),
(d) an integrator (I) is provided which forms a value for the average fill level of the elastic memory (ES),
(e) a lowpass filter (T) is connected with the integrator (I),
(f) the lowpass filter (7) is connected with a decider (SE) which makes the stuffing decision as a function of the output signal of the lowpass filter (T) and which generates a correction value containing the stuffing information,
(g) the decider (SE) is connected with a frame generator (RF) which causes stuffing to take place as specified by the correction value, and
(h) the decider (SE) is connected with the lowpass filter (T) in order to correct by means of the correction value at the output voltage of the lowpass filter (T).

## Revendications

1. Dispositif pour reproduire au moyen d'une technique de justification (bourrage) à impulsions, un signal utile (D) provenant de la trame d'un premier signal numérique (A(D)) ayant un premier débit binaire dans la trame d'un second signal numérique (S′(A)) ayant un deuxième débit binaire, caractérisé en ce qu'il comprend
a) une mémoire tampon (ES′) dans laquelle le signal utile (D) provenant de la trame du premier signal numérique est inscrit dans le second signal numérique (A(D)) et à partir de laquelle est extrait le signal utile (D) contenu dans la trame du second signal numérique (S′(D)),
b) un intégrateur (I′) qui forme une grandeur représentative du niveau de remplissage moyen de la mémoire tampon (ES′), grandeur qui est comparable avec la grandeur représentative du niveau de remplissage moyen de la mémoire tampon (ES) d'un synchroniseur,
c) un additionneur (AD) dans lequel sont additionnées la grandeur représentative du niveau de remplissage moyen de la mémoire tampon (ES) du synchroniseur, laquelle a été transmise dans la trame du second signal numérique (A) au désynchroniseur, et la grandeur représentative du niveau de remplissage moyen de la mémoire tampon (ES′) du dispositif,
d) un filtre numérique (F) connecté à l'additionneur,
e) un modulateur de densité d'impulsions (PDM) qui prend la décision quant à la justification en fonction de la valeur de sortie du filtre numérique (F),
f) un générateur de trame (RG′) qui génère la trame du second signal numérique (S(D*)) et commande l'activation pour la lecture de la mémoire tampon (ES′) et
g) un détecteur de trame (RD′) qui reconnaît la trame du premier signal numérique (A(D)) et commande l'activation pour l'écriture de la mémoire tampon.

2. Dispositif selon la revendication 1, caractérisé en ce que le modulateur de densité d'impulsions (PDM) comprend un élément de maintien d'échantillonnage (AHG) auquel est amené le signal de sortie du filtre (F), un additonneur qui, une fois par trame de justification du second signal numérique (S′(D)), ajoute modulo 1 le signal de sortie du filtre (F) à la somme des signaux de sortie additionnés jusqu'à ce moment, ainsi qu'un circuit de décision de justification (SE′) dans lequel la décision quant à la justification est prise en fonction du résultat de l'addition.

3. Dispositif selon la revendication 1 ou 2, caractérisé en ce que, pour déterminer une grandeur représentative du niveau de remplissage moyen de la mémoire tampon (ES), les moyens suivants sont prévus:
a) un compteur d'écriture qui compte chaque fois qu'un bit est inscrit dans la mémoire tampon (ES),
b) un compteur de lecture qui compte chaque fois qu'un bit est extrait de la mémoire tampon (ES),
c) un échantillonneur qui échantillonne le compteur comptant l'inscription ou l'extraction du signal numérique avec le débit binaire faible, la fréquence d'échantillonnage correspondant au débit binaire du signal numérique ayant le débit binaire plus élevé,
d) un comparateur qui compare la valeur échantillonnée de la position dudit compteur avec la position de l'autre compteur et
e) un intégrateur formant la grandeur représentative du niveau de remplissage moyen à partir des résultats des comparaisons.

4. Utilisation du dispositif selon une des revendications 1 à 3 dans un système comprenant un synchroniseur, une ligne de transmission et ce dispositif, le niveau de remplissage moyen de la mémoire tampon étant déterminé dans le synchroniseur.

5. Utilisation selon la revendication 4, caractérisée en ce que le synchroniseur comprend:
a) une mémoire tampon (ES) dans laquelle est inscrit le signal utile (D) provenant de la trame d'un signal numérique (S) et à partir de laquelle est extrait le signal utile (D) contenu dans la trame du signal numérique (A),
b) un détecteur de trame (RD) qui reconnaît la trame du signal numérique (S) et commande l'activation pour l'écriture de la mémoire tampon (ES),
c) un générateur de trame (RG) qui génère la trame du signal numérique (A) et commande l'activation pour la lecture de la mémoire tampon (ES),
d) un intégrateur (I) formant une grandeur représentative du niveau de remplissage moyen de la mémoire tampon (ES),
e) un filtre passe-bas (T) connecté à l'intégrateur (I) et
f) un circuit de décision (SE) connecté au filtre passe-bas (T), circuit qui prend la décision quant à la justification en fonction du signal de sortie du filtre passe-bas (T) et génère une valeur de correction contenant l'information de justification,
g) le circuit de décision (SE) étant connecté à un générateur de trame (RF) qui déclenche la justification en fonction de la valeur de correction et
h) le circuit de décision (SE) étant connecté au filtre passe-bas (T) afin de corriger la tension de sortie de ce filtre par la valeur de correction.
